# EUROPÄISCHE PATENTSCHRIFT

(11) **EP 0 904 311 B1**
(45) Veröffentlichungstag und Bekanntmachung des Hinweises auf die Patenterteilung: **07.03.2001**
(21) Anmeldenummer: 97922921.8
(22) Anmeldetag: 30.04.1997
(51) Int. Cl.: C08G 18/62, C08G 18/70

(54) **PULVERLACK ZUR HERSTELLUNG EINER MEHRSCHICHTLACKIERUNG**
POWDER PAINT FOR MULTILAYERED PAINTING
PEINTURE PULVERULENTE POUR APPLICATION DE PEINTURE MULTICOUCHE

(30) Priorität: 31.05.1996 DE 19621836
(43) Veröffentlichungstag der Anmeldung: 31.03.1999
(73) Patentinhaber: BASF Coatings Aktiengesellschaft, 48165 Münster (DE)
(72) Erfinder: WONNEMANN, Heinrich, D-48291 Telgte (DE); WOLTERING, Joachim, D-48159 Münster (DE); STREITBERGER, Hans-Joachim, D-48165 Münster (DE); BLUM, Rainer, D-67069 Ludwigshafen (DE)
(74) Vertreter: Fitzner, Uwe, Dr.
(86) Internationale Anmeldenummer: EP9702209
(87) Internationale Veröffentlichungsnummer: WO9746604

(56) Entgegenhaltungen:
- EP-A- 0 219 131
- EP-A- 0 517 028
- WO-A-93/25599
- WO-A-94/09913

## Beschreibung

Gegenstand der vorliegenden Erfindung ist ein Pulverlack, enthaltend
A) mindestens ein hydroxylgruppenhaltiges Binde mittel (A) und
B) mindestens ein Vernetzungsmittel mit freien Iso cyanatgruppen, das in Form von diskreten Teilchen mit Teilchendurchmessern zwischen 0,1 bis 150 Mikrometern in dem Bindemittel dispergiert ist.

Die vorliegende Erfindung betrifft außerdem die Verwendung der Pulverlacke zur Herstellung einer Mehrschichtlackierung.

Aus der WO93/25599 sind Stoffmischungen auf der Basis hydroxylgruppenhaltiger Bindemittel und isocyanatgruppenhaltiger Vernetzer, die in Form von diskreten Teilchen mit Teilchendurchmessern zwischen 0,1 bis 150 Mikrometern in dem hydroxylgruppenhaltigen Bindemittel dispergiert sind, bekannt. Diese Stoffmischungen werden insbesondere als Schmelzklebemassen, aber auch als Pulverlacke eingesetzt. Pulverklarlacke und die Verwendung der Pulverklarlacke zur Herstellung einer Mehrschichtlackierung sind in der WO93/25599 jedoch nicht beschrieben.

Weiterhin ist aus der EP-A-431 413 ein Verfahren zur Herstellung von Pulverlacken auf der Basis hydroxylgruppenhaltiger Bindemittel und isocyanatgruppenhaltiger Vernetzer bekannt, bei dem das Bindemittel/-Vernetzer-Gemisch in Form einer Schmelze einem Emulgator enthaltenden inerten Lösemittel zugesetzt und anschließend der Pulverlack abgetrennt wird. Pulverklarlacke und die Verwendung der Pulverklarlacke zur Herstellung einer Mehrschichtlackierung sind in der EP-A-431 413 jedoch ebenfalls nicht beschrieben.

Aus der DE-A-32 30 757 ist ein Verfahren zur Herstellung von durch Polymerumhüllung stabilisierten, festen Polyisocyanaten mit verminderter Reaktivität sowie die Verwendung dieser Polyisocyanate zusammen mit bei Raumtemperatur flüssigen oder festen hydroxylgruppenhaltigen Bindemitteln in reaktiven Stoffmischungen zur Herstellung von Polyurethanen bekannt. Pulverlacke sowie die Verwendung der reaktiven Stoffmischungen zur Herstellung von Mehrschichtlackierungen sind in der DE-A-32 30 757 wiederum nicht beschrieben.

Weiterhin ist aus der DE-A-35 17 333 ein Verfahren zur Herstellung von Dispersionen feinteiliger Polyisocyanate bekannt, bei dem die Polyisocyanate mit einem Stabilisator behandelt werden, danach dispergiert und anschließend nochmals unter Einwirkung hoher Scherkräfte dispergiert und/oder einer Mahlung unterworfen werden.

Ferner ist aus der WO 94/09913 ein Verfahren zur Herstellung von Pulverlacken bekannt, bei dem das Bindemittel und der Vernetzer unter Verwendung von superkritischem Gas, insbesondere superkritischem Kohlendioxid, gelöst und die Pulverlackpartikel durch anschließendes Versprühen erzeugt werden. Die Herstellung von Pulverklarlacken auf der Basis hydroxylgruppenhaltiger Bindemittel und isocyanatgruppenhaltiger Vernetzer ist jedoch in der WO 94/09913 nicht beschrieben.

Weiterhin ist in der WO94/11120 ein Verfahren zur Herstellung von Pulverlacken bekannt, bei dem das Bindemittel und der Vernetzer unter Verwendung von mittels Druck verflüssigtem Gas, insbesondere flüssigem Stickstoff, gelöst und die Pulverlackpartikel durch anschließendes Versprühen erzeugt werden.

Schließlich ist aus der DE-A-44 06 157 ein Pulverlack bekannt, der ein hydroxylgruppenhaltiges Bindemittel und ein Polyisocyanat mit freien Isocyanatgruppen als Vernetzer enthält. Das Bindemittel besteht dabei aus einer Polyolkomponente, deren Hydroxylgruppen zu mindestens 50 % aus sekundär und/oder tertiär gebundenen OH-Gruppen bestehen. Die dort beschriebenen Pulverlacke weisen aber den Nachteil auf, daß der Lack eine unvollständige Vernetzung und dadurch mangelhafte mechanischtechnologische Eigenschaften aufweist.

Weiterhin sind aus der EP-B-100 507, der EP-B-100 508, der EP-A-62 780 und dem Übersichtsartikel von Blum, R. und Schupp, H. in Prog. Org. Coat. 1990, 18(3), Seiten 275 - 288, Stoffmischungen aus Polyisocyanat mit freien Isocyanatgruppen und Polyol bekannt, bei denen'das Polyisocyanat in Form von diskreten festen Teilchen im Polyol dispergiert ist. Die Polyisocyanatteilchen sind dabei an ihrer Oberfläche desaktiviert. Die dort beschriebenen Stoffmischungen haben flüssige bis pastöse Konsistenz, während Pulverlacke in diesen Schriften nicht beschrieben werden.

Schließlich sind auch aus der EP-A-148 462, der EP-A-153 579 und der DE-A-34 03 500 Einkomponenten-Polyurethansysteme bekannt, bei denen das Polyisocyanat in Form von diskreten festen Teilchen im Polyol dispergiert ist. Auch in diesen Schriften sind wiederum keine Pulverlacke beschrieben.

Der vorliegenden Erfindung liegt somit die Aufgabe zugrunde, Pulverlacke zu Verfügung zu stellen, die bei niedrigen Temperaturen von beispielsweise ≤ 160 °C, beorzugt ≤ 140 °C aushärtbar sind und die auch bei diesen niedrigen Einbrenntemperaturen zu transparenten Beschichtungen mit den geforderten guten Eigenschaften führen. So sollten die Pulverlacke zu Beschichtungen mit einer guten Chemikalienbeständigkeit und einer guten Witterungsstabilität sowie einer möglichst guten Vergilbungsbeständigkeit führen. Ferner sollten die Pulverlacke bei der Verwendung als Pulverklarlacke zur Herstellung einer Mehrschichtlackierung eine gute Kompatibilität zur Basislackschicht und eine gute Farbtonneutralität zeigen.

Diese Aufgabe wird überraschenderweise durch die Pulverlacke der eingangs genannten Art gelöst, die dadurch gekennzeichnet sind, daß
als Bindemittel (A)
A1) mindestens ein hydroxylgruppenhaltiges Acrylatcopolymerisat (A1) mit einer Glasübergangstemperatur von 30 bis 80 °C, einem zahlenmittleren Molekulargewicht von 2.000 bis 15.000 Dalton und einer OH-Zahl von 60 bis 180 mgKOH/g, wobei die Hydroxylgruppen des Bindemittels (A1) zu mehr als 50% aus primär gebundenen OH-Gruppen bestehen, und/oder
A2) das Umsetzungsprodukt aus einem carboxylgruppenhaltigen Acrylatcopolymerisat und einer epoxidgruppenhaltigen Verbindung oder das Umsetzungsprodukt aus einem epoxidgruppenhaltigen Acrylatcopolymerisat und einer carboxylgruppenhaltigen Verbindung, wobei die Carboxy/Epoxy-Umsetzung jeweils vor oder während der Reaktion des Bindemittels (A) mit dem Vernetzungsmittel (B) erfolgen kann,
eingesetzt wird.

Gegenstand der vorliegende Erfindung ist außerdem die Verwendung der Pulverlacke zur Herstellung einer Mehrschichtlackierung.

Es ist überraschend und war nicht vorhersehbar, daß die Pulverlacke bei niedrigen Temperaturen von beispielsweise ≤ 160 °C, bevorzugt ≤ 140 °C aushärtbar sind und daß sie auch bei diesen niedrigen Einbrenntemperaturen zu transparenten Beschichtungen mit den geforderten guten Eigenschaften, wie z.B. einer guten Chemikalienbeständigkeit und einer guten Witterungsstabilität sowie einer möglichst guten Vergilbungsbeständigkeit, führen. Ferner zeigen die Pulverlacke bei Verwendung als Pulverklarlacke zur Herstellung einer Mehrschichtlackierung eine gute Kompatibilität zur Basislackschicht und eine gute Farbtonneutralität.

Im folgenden werden nun die einzelnen Bestandteile der erfindungsgemäßen Pulverlacke näher erläutert.

Es ist erfindungswesentlich, daß das Bindemittel und das freie Isocyanatgruppen enthaltende Vernetzungsmittel ein heterogenes System bilden, bei dem das Polyisocyanat in Form von diskreten Teilchen, die im Bindemittel dispergiert sind, vorliegt. Bevorzugt liegt das Polyisocyanat in kristalliner Form vor. Durch die heterogene Verteilung des Polyisocyanates werden lagerstabile pulverförmige Stoffmischungen erhalten. Bei der thermischen Härtung der Pulverlacke wird die Phasentrennung aufgehoben und die Vernetzungsreaktion zwischen den Isocyanatgruppen und den Hydroxylgruppen kann stattfinden.

Die erfindungsgemäßen Pulverlacke enthalten die Polyisocyanate in Form diskreter Teilchen mit Teilchendurchmessern zwischen 0,1 und 150 Mikrometern, bevorzugt 0,1 bis 50 Mikrometern, besonders bevorzugt 1 bis 20 Mikrometern und ganz besonders bevorzugt 1 bis 10 Mikrometern.

Zur Herstellung der erfindungsgemäßen Pulverlacke können Polyisocyanate eingesetzt werden, die an ihrer Oberfläche durch Umsetzung mit einem Desaktivierungsmittel desaktiviert sind. Das Desaktivierungsmittel wird zweckmäßigerweise so gewählt, daß es an der Oberfläche der Polyisocyanatteilchen durch chemische oder physikalische Kräfte gebunden ist und so eine Phasentrennung zwischen Polyisocyanatteilchen und Bindemittelteilchen bewirkt.

Üblicherweise werden für die Desaktivierung 0,5 bis 25, bevorzugt 0,2 bis 12 Äquivalentprozent, der insgesamt vorhandenen Isocyanatgruppen mit dem Desaktivierungsmittel zur Reaktion gebracht.

Als Desaktivierungsmittel kommen beispielsweise in Frage: Wasser, primäre und sekundäre Mono-, Di- und Polyamine, Hydrazinderivate, Amidine, Guanidine, Mono- und Polyalkohole sowie Verbindungen, die Carboxylgruppen, phenolische Hydroxylgruppen, Amidgruppen oder Hydrazidgruppen enthalten. Beispiele für geeignete Desaktivierungsmittel sind auch die in der EP-B-100508 in Spalte 6, Zeilen 10 bis 37, und Spalte 6, Zeile 53, bis Spalte 7, Zeile 19, und der EP-B-100507, Spalte 5, Zeilen 20 bis 58, genannten Verbindungen sowie die in der EP-A-431 413, der DE-A-35 17 333, der DE-A-32 30 757, der DE-A-35 29 530, DE-A-34 03 500 und der EP-A-153 579 genannten Desaktivierungsmittel.

Bezüglich weiterer Einzelheiten der Desaktivierung wird beispielsweise auf die EP-A-62 780, Seiten 6 und 7, die EP-B-100508, Spalten 6 und 7, sowie die EP-B-100507, Spalte 5, verwiesen.

Die Herstellung der erfindungsgemäßen Pulverlacke unter Verwendung der desaktivierten Polyisocyanate erfolgt nach den üblichen Verfahren zur Herstellung derartiger Pulverlacke. Sie können beispielsweise dadurch hergestellt werden, daß das Polyisocyanat fein vorvermahlen wird, bevorzugt auf eine Teilchengröße zwischen 0,1 und 50 Mikrometer, besonders bevorzugt 1 bis 20 Mikrometer und ganz besonders bevorzugt 1 bis 10 Mikrometer. Das Polyisocyanat wird dann zusammen mit dem Bindemittel sowie weiteren üblichen Hilfs- und Zusatzstoffen zunächst trocken gemischt und anschließend mit einem Doppelschneckenextruder oder in einem Mischkneter bei Temperaturen zwischen 60 und 120 Grad C, vorzugsweise zwischen 80 und 120 Grad C gemischt und extrudiert. Das Extrudat wird nach vorgeschalteter Zerkleinerung in einer Mühle gemahlen, wobei mittlere Teilchengrößen zwischen 10 und 60 , vorzugsweise zwischen 20 und 40 Mikrometer erhalten werden. Eventuell vorhandene Grobanteile werden durch Sieben oder Sichten entfernt.

Die Funktion des Desaktivierungsmittels können auch spezifische Additive oder Bindemittelbestandteile übernehmen.

Die erfindungsgemäßen Pulverlacke können auch nach dem in der WO 94/09913 beschriebenen Verfahren hergestellt werden. Wegen Einzelheiten sei daher auf die WO 94/09913, Seiten 5 bis 12 verwiesen.

Bei diesem Verfahren wird zunächst das Bindemittel in überkritischem Gas, bevorzugt überkritischem Kohlenstoffdioxid, gelöst und anschließend werden das Vernetzungsmittel sowie ggf. weitere übliche Hilfs- und Zusatzstoffe zugefügt. Bevorzugt wird dabei das Vernetzungsmittel vor der Einarbeitung in die Bindemittellösung auf eine Teilchengröße zwischen 0,1 und 50 Mikrometern, bevorzugt 1 bis 20 Mikrometern und ganz besonders bevorzugt zwischen 1 und 10 Mikrometern, vermahlen. Die bei der Herstellung der Pulverlacklösung jeweils einzustellende Temperatur und der jeweils einzustellende Druck hängen dabei vom verwendeten überkritischem Gas ab. Üblicherweise liegt die Temperatur zwischen -85 und +200 °C. Wird mit überkritischem Kohlenstoffdioxid gearbeitet, liegt die Temperatur üblicherweise zwischen 15 und 150 °C, bevorzugt zwischen 31 und 100 °C. Bevorzugt wird außerdem die Temperatur so eingestellt, daß sie unterhalb des Schmelzpunktes des pulverförmigen Isocyanates liegt. Der einzustellende Druck liegt üblicherweise zwischen 0 und 345 bar , bevorzugt zwischen 7 und 150 bar, besonders bevorzugt zwischen mehr als 20 und 70 bar.

Anschließend werden die Pulverteilchen durch Versprühen erzeugt (Sprühtrocknung). Dabei fällt das Polyisocyanat in Form diskreter, in dem Bindemittel dispergierter Teilchen aus.

Es ist ferner auch möglich, nur das Bindemittel und ggf. weitere Hilfs- und Zusatzstoffe in dem überkritischen Gas, insbesondere Kohlenstoffdioxid, zu lösen und diese Bindemittellösung und getrennt davon den pulverförmigen, vorvermahlenen Vernetzer einer Zweistoffdüse zuzuführen, beide Komponenten in der Düse zu mischen und durch Versprühen den Pulverlack herzustellen.

Beispiele für geeignete überkritische Gase sind neben Kohlenstoffdioxid Wasser, Methan, Ethan, Ethylen, Propan, Pentan, Methanol, Ethanol, Fluorkohlenwasserstoffe u.ä. Wegen Einzelheiten sei wiederum auf die W094/09913, Seiten 10 bis 12, verwiesen.

Neben der Verwendung von superkritischen Gasen können die erfindungsgemäßen Pulverlacke auch durch Verwendung von verflüssigten Gasen hergestellt werden, wie dies ausführlich in der WO94/11120 beschrieben ist und auf die bezüglich weiterer Einzelheiten verwiesen wird.

Zur Herstellung der erfindungsgemäßen Pulverlacke sind dabei alle verflüssigten Gase geeignet, die bei einem Druck von maximal 20 bar, bevorzugt maximal 10 bar und besonders bevorzugt bei normalem Umgebungsdruck verflüssigt worden sind, indem sie nach dem Fachmann bekannten Methoden auf die entsprechend tiefen Temperaturen abgekühlt worden sind. Als Beispiele für geeignete verflüssigte Gase seien flüssiger Stickstoff, flüssige Luft und flüssiges Helium genannt. Aufgrund der guten Verfügbarkeit und des niedrigen Preises wird insbesondere flüssiger Stickstoff eingesetzt, wobei je nach Anwendungszweck der Pulverlack-Suspensionen aber auch andere verflüssigte Gase zum Einsatz kommen.

Durch die Verwendung von Gas, das bei einem Druck von maximal 20 bar verflüssigt wurde, ist gewährleistet, daß die Suspension ohne aufwendige Vorrichtungen zur Aufrechterhaltung hoher Drucke gehandhabt werden kann, während die Verwendung überkritischer Gase, wie z. B. von verflüssigtem CO2, die Aufrechterhaltung hoher Drucke bei der Herstellung, Lagerung, Transport und Verarbeitung der Suspensionen erfordert. Die Verwendung von Gasen, die bei einem Druck von maximal 20 bar verflüssigt worden sind, schließt aber selbstverständlich nicht aus, daß die erfindungsgemäß eingesetzte Suspension einem erhöhten Druck, beispielsweise beim Transport in einer Ringleitung, ausgesetzt wird, nur ist eben ein solcher Druck nicht zur Aufrechterhaltung der Suspension erforderlich.

Anschließend werden die Pulverlackteilchen wiederum durch Versprühen erzeugt (Sprühtrocknung). Dabei fällt das Polyisocyanat in Form diskreter, in dem Bindemittel dispergierter Teilchen aus.

Schließlich können die erfindungsgemäßen Pulverlacke auch dadurch erhalten werden, daß das Bindemittel und das Vernetzungsmittel zunächst getrennt aufgeschmolzen und in schmelzeflüssigem Zustand (hierbei ist die Temperatur der Schmelze jeweils so zu wählen, daß eine entsprechend niedrige Viskosität der Schmelze erreicht wird, die eine gute Vermischung der Komponenten unter den angegebenen Bedingungen gewährleistet) während einer möglichst kurzen Zeit, bevorzugt während einer Zeit von weniger als 1 Minute, besonders bevorzugt während einer Zeit von 0,01 bis 10 Sekunden, gemischt und anschließend schnell abgekühlt, bevorzugt abgeschreckt, werden. Danach wird die erhaltene heterogene Stoffmischung auf die gewünschte Teilchengröße vermahlen. Auch bei diesem Verfahren bildet sich das erfindungsgemäße heterogene System.

Bei diesem Verfahren ist allerdings darauf zu achten, daß die Vermischung des schmelzeflüssigen Bindemittels und Vernetzungsmittels bei den erhöhten Temperaturen in so kurzer Zeit erfolgt, daß die Polyisocyanate nur an ihrer Oberfläche mit den Hydroxylgruppen des Bindemittels reagieren und so das erfindungsgemäße heterogene System erhalten wird. Das Mischen des schmelzeflüssigen Bindemittels und des schmelzeflüssigen Vernetzungsmittels erfolgt daher bevorzugt unter Verwendung eines Intensivmischers o.ä., während Extruder aufgrund der langen Verweilzeiten i.a. nicht geeignet sind.

Zu den Aufbaukomponenten der erfindungsgemäßen Pulverlacke ist im einzelnen folgendes auszuführen.

Als Bindemittel (Komponente (A)) enthalten die erfindungsgemäßen Pulverlacke
A1) mindestens ein hydroxylgruppenhaltiges Acrylatcopolymerisat (A1) mit einer Glasübergangstemperatur von 30 bis 80 °C, bevorzugt 40 bis 60 °C (jeweils gemessen mit Hilfe der differential scanning calometrie (DSC)), einem zahlenmittleren Molekulargewicht von 2.000 bis 15.000 Dalton, bevorzugt 2.500 bis 10.000 (jeweils bestimmt gelpermeationschromatographisch unter Verwendung eines Polystyrolstandards), und einer OH-Zahl von 60 bis 180 mgKOH/g,bevorzugt 100 bis 170 mgKOH/g, wobei die Hydroxylgruppen des Bindemittels (A1) zu mehr als 50 %, bevorzugt mindestens 60 %, aus primär gebundenen OH-Gruppen bestehen, und/oder
A2) das Umsetzungsprodukt aus einem carboxylgruppenhaltigen Acrylatcopolymerisat und einer epoxidgruppenhaltigen Verbindung oder das Umsetzungsprodukt aus einem epoxidgruppenhaltigen Acrylatcopolymerisat und einer carboxylgruppenhaltigen Verbindung, wobei die Carboxy/Epoxy-Umsetzung jeweils vor oder während der Reaktion des Bindemittels (A) mit dem Vernetzungsmittel (B) erfolgen kann.

Als Bindemittel für den Pulverlack sind beispielsweise hydroxylgruppenhaltige Polyacrylatharze (A1) geeignet, die durch Copolymerisation von mindestens einem ethylenisch ungesättigten Monomer, das mindestens eine Hydroxylgruppe im Molekül enthält, mit mindestens einem weiteren ethylenisch ungesättigten Monomer, das keine Hydroxylgruppe im Molekül enthält, herstellbar sind, wobei mindestens eines der Monomere ein Ester der Acrylsäure oder Methacrylsäure ist. Geeignete hydroxylgruppenhaltige Polyacrylatharze (A1) sind auch z.B. bekannt aus DE-A-43 37 480, DE-A-41 18 052 und EP-A-591 862.

Als hydroxylgruppenhaltige Monomere werden beispielsweise Hydroxyethyl (meth) acrylat, Hydroxypropyl(meth)acrylat und Hydroxybutyl(meth)acrylat genannt, wobei bevorzugt Hydroxyethylmethacrylat, ggf. zusammen mit anderen hydroxylgruppenhaltigen Monomeren, eingesetzt wird.

Als Beispiele für ethylenisch ungesättigte Monomere, die keine Hydroxylgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat genannt. Weitere Beispiele für ethylenisch ungesättigte Monomere, die keine Hydroxylgruppen im Molekül enthalten sind, Säureamide, wie z.B. Acrylsäure- und Methacrylsäureamid, vinylaromatische Verbindungen, wie Styrol, Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z.B. Vinylacetat und carboxylgruppenhaltige Monomere, wie z.B. Acrylsäure und Methacrylsäure.

Ferner kann in dem erfindungsgemäßen Pulverlack als Bindemittel oder als weiteres Bindemittel auch das Umsetzungsprodukt aus einem carboxylgruppenhaltigen Acrylatcopolymerisat und einer epoxidgruppenhaltigen Verbindung oder das Umsetzungsprodukt aus einem epoxidgruppenhaltigen Acrylatcopolymerisat und einer carboxylgruppenhaltigen Verbindung eingesetzt werden.

Die Carboxy/Epoxy-Umsetzung kann dabei vor der Mischung mit dem isocyanatgruppenhaltigen Vernetzer erfolgen, d.h. als Bindemittel wird das Umsetzungsprodukt eingesetzt. Es ist aber auch möglich, in dem erfindungsgemäßen Pulverlack eine Mischung aus der epoxidgruppenhaltigen Komponente und der carboxylgruppenhaltigen Komponente einzusetzen. In diesem Fall erfolgt die Carboxy/Epoxy-Umsetzung erst während der Aushärtung des Pulverlacks, wobei die bei der Carboxy/Epoxy-Umsetzung gebildeten Hydroxylgruppen dann in situ mit dem Isocyanatvernetzer reagieren.

Für aen Einsatz in dem erfindungsgemäßen Pulverlack sind z.B. epoxidgruppenhaltige Polyacrylatharze geeignet, die durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist. Derartige epoxidgruppenhaltige Polyacrylatharze sind z.B.bekannt aus EP-A-299 420, DE-B-22 14 650, DE-B-27 49 576, US-A-4,091,048 und US-A-3,781,379).

Beispiele für ethylenisch ungesättigte Monomere, die keine Epoxidgruppe im Molekül enthalten, sind die bereits bei der Beschreibung der hydroxylgruppenhaltigen Acrylatcopolymerisate genannten Verbindungen.

Das epoxidgruppenhaltige Polyacrylatharz weist üblicherweise ein Epoxidäquivalentgewicht von 400 bis 2500, vorzugsweise 420 bis 700, ein zahlenmittleres Molekulargewicht (gelpermeationschromatographisch unter Verwendung eines Polystyrolstandards bestimmt) von 2.000 bis 20.000, vorzugsweise von 3.000 bis 10.000, und eine Glasübergangstemperatur (TG) von 30 bis 80, vorzugsweise von 40 bis 70, besonders bevorzugt von 40 bis 60°C auf (gemessen mit Hilfe der Differential Scanning Calorimetrie (DSC)). Ganz besonders bevorzugt werden ca. 50°C. Zum Einsatz können auch Gemische aus zwei oder mehr Acrylatharzen kommen.

Für die Umsetzung mit den epoxidgruppenhaltigen Acrylatcopolymerisaten sind z.B. Carbonsäuren, insbesondere gesättigte, geradkettige, aliphatische Dicarbonsäuren mit 3 bis 20 C-Atomen im Molekül geeignet. Ganz besonders bevorzugt wird eine Dicarbonsäure mit 12 C-Atomen im Molekül, wie z.B. Dodecan-1,12-dicarbonsäure eingesetzt. Zur Modifizierung der Eigenschaften der fertigen Pulverlacke können ggf. noch andere Carboxylgruppen enthaltende Verbindungen eingesetzt werden. Als Beispiele hierfür seien gesättigte verzweigte oder ungesättigte geradkettige Di- und Polycarbonsäuren sowie Polymere mit Carboxylgruppen genannt.

Ferner sind für die Herstellung der erfindungsgemäßen Pulverlacke auch carboxylgruppenhaltige Polyacrylatharze geeignet, die durch Copolymerisation von mindestens einem ethylenisch ungesättigten Monomer, das mindestens eine Säuregruppe im Molekül enthält, mit mindestens einem weiteren ethylenisch ungesättigten Monomer, das keine Säuregruppe im Molekül enthält, herstellbar sind.

Bevorzugt werden carboxylgruppenhaltige Acrylatcopolymerisate mit einer Glasübergangstemperatur von 30 bis 80 °C, bevorzugt 40 bis 60 °C (jeweils gemessen mit Hilfe der differential scanning calometrie (DSC)), einem zahlenmittleren Molekulargewicht von 2.000 bis 15.000 Dalton, bevorzugt 2.500 bis 10.000 (jeweils bestimmt gelpermeationschromatographisch unter Verwendung eines Polystyrolstandards), und einer Säurezahl von 60 bis 180 mgKOH/g,bevorzugt 100 bis 170 mgKOH/g, eingesetzt.

Die epoxidgruppenhaltige Verbindung und die carboxylguppenhaltige Verbindung werden üblicherweise in einer solchen Menge eingesetzt, daß pro Äquivalent Epoxidgruppen 0,5 bis 1,5, vorzugsweise 0,75 bis 1,25 Äquivalente Carboxylgruppen vorliegen. Die Menge an vorliegenden Carboxylgruppen kann durch Titration mit einer alkoholischen KOH-Lösung ermittelt werden.

Bevorzugt werden in den erfindungsgemäßen Pulverlacken als Bindemittel hydroxyl- bzw. carboxyl- bzw. epoxidgruppenhaltige Acrylatcopolymerisate eingesetzt, die einen Gehalt an vinylaromatischen Verbindungen von weniger als 50 Gew.-%, besonders bevorzugt von weniger als 30 Gew.-%, ganz besonders bevorzugt von 10 bis 25 Gew.-%, jeweils bezogen auf das Gesamtgewicht der eingesetzten Monomeren, enthalten.

Die obengenannten hydroxyl- bzw. epoxid- bzw. carboxylgruppenhaltigen Polyacrylatharze können nach allgemein gut bekannten Methoden durch Polymerisation hergestellt werden.

Selbstverständlich können auch beliebige Mischungen der genannten Bindemittel eingesetzt werden.

In dem erfindungsgemäßen Pulverlack können ggf. zusammen mit dem hydroxylgruppenhaltigen Bindemittel auf Acrylatbasis (Komponente A1 und/oder A2) auch hydroxylgruppenhaltige Polyesterharze eingesetzt werden, die in üblicher Weise aus aromatischen oder aliphatischen oder cycloaliphatischen Di- und/oder Polyolen, ggf. in Kombination mit Monoolen, und aromatischen oder aliphatischen oder cycloaliphatischen Di- und/oder Polycarbonsäuren, ggf. in Kombination mit Monocarbonsäuren, hergestellt worden sind. Aufgrund der besseren Kreidungs- und Witterungsbeständigkeit werden vorzugsweise aliphatische und/oder cycloaliphatische Aufbaukomponenten für die Herstellung der Polyesterharze eingesetzt.

Beispielsweise können die Polyesterharze hergestellt worden sein unter Verwendung von Ethylenglykol, Propandiol, Butandiol, Neopentylglykol, Hexandiol, Cyclohexandiol, 4,4'-Dihydroxydicyclohexylpropan-2,2, Trimethylolpropan, Hexantriol, Pentaerythrit. Als weitere Diole sind auch Ester von Hydroxycarbonsäuren mit Diolen geeignet, wobei als Diol die voranstehend genannten Diole eingesetzt werden können. Beispiele für Hydroxycarbonsäuren sind Hydroxypivalinsäure oder Dimethylolpropansäure. Als Säuren können z.B. Adipinsäure, Glutarsäure, Acelainsäure, Sebacinsäure, Fumarsäure, Maleinsäure, Tetrahydrophthalsäure, Hexahydrophthalsäure, Cyclohexandicarbonsäure, Phthalsäure, Terephthalsäure, Isophthalsäure und Trimellithsäure eingesetzt werden. Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren eingesetzt werden, sofern sie existieren.

Geeignete hydroxylgruppenhaltige Polyesterharze sind auch z.B. bekannt aus der DE-A-25 47 124 und der EP-A-408 465.

Als Vernetzungsmittel enthalten die erfindungsgemäßen Pulverlacke mindestens ein Isocyanat. Geeignet sind die üblichen bei Raumtemperatur festen Isocyanate, bevorzugt kristalline Isocyanate. Sie können erhalten werden durch Addition von Diisocyanaten an Di-, Tri- oder Polyole oder Di-, Tri- oder Polyamine, oder aus Diisocyanaten durch Dimerisierung zu Uretdionen, Trimerisierung zu Isocyanuraten und mit Aminen oder Wasser zu Biureten. Auch Allophanat-, Carbodiimid- und Estergruppen enthaltende Di- und Polyisocyanate sind als Vernetzungsmittel für die erfindungsgemäßen Pulverlacke geeignet. Aufgrund ihrer guten Beständigkeit gegenüber ultraviolettem Licht ergeben (cyclo)aliphatische Diisocyanate Produkte mit geringer Vergilbungsneigung. Bevorzugt werden daher isocyanatgruppenhaltige Verbindungen z.B. auf Basis von Isophoron und Isophoron-Derivaten eingesetzt.

Für die Herstellung der erfindungsgemäß eingesetzten festen Di- und Polyisocyanate sind z.B. folgende Isocyanate geeignet: Phenylendiisocyanat, Toluylendiisocyanat, Xylylendiisocyanat, Bisphenylendiisocyanat, Naphthylendiisocyanat, Diphenylmethandiisocyanat, Isophorondiisocyanat, Cyclobutandiisocyanat, Cyclopentylendiisocyanat, Cyclohexylendiisocyanat, Methylcyclohexylendiisocyanat, Dicyclohexylmethandiisocyanat, > Ethylendiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat. Ferner sind auch Diisocyanate der allge- meinen Formel (III') 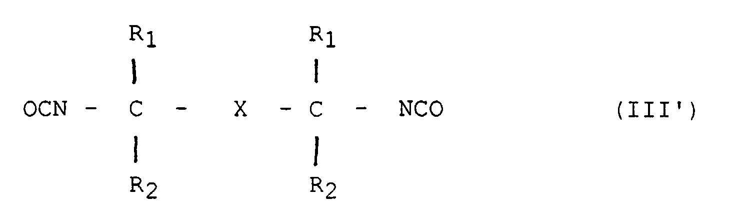 geeignet, wobei X für einen zweiwertigen, aromatischen Kohlenwasserstoffrest, vorzugsweise für einen ggf. Halogen-, Methyl- oder Methoxy-substituierten Naphthylen-, Diphenylen- oder 1,2-, 1,3- oder 1,4-Phenylenrest, besonders bevorzugt für einen 1,3-Phenylenrest und R₁ und R₂ für einen Alkylrest mit 1 - 4 C-Atomen, bevorzugt für einen Methylrest, stehen. Diisocyanate der Formel (III') sind bekannt (ihre Herstellung wird beispielsweise in der EP-A-101 832, US-PS-3,290,350, US-PS-4,130,577 und der US-PS-4,439,616 beschrieben) und zum Teil im Handel erhältlich (1,3-Bis-(2-isocyanatoprop-2-yl)-benzol wird beispielsweise von der American Cyanamid Company unter dem Handelsnamen TMXDI (META)® verkauft).

Weiterhin sind Diisocyanate der Formel (IV') geeignet: 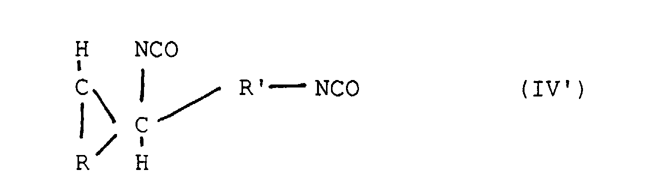 in der R für einen zweiwertigen Alkyl- oder Aralkylrest mit 3 bis 20 Kohlenstoffatomen und R' für einen zweiwertigen Alkyl- oder Aralkylrest mit 1 bis 20 Kohlenstoffatomen steht.

Als Beispiele für bevorzugte Vernetzungsmittel seien die folgenden Isocyanate genannt: das Additionsprodukt aus Toluylendiisocyanat und Trimethylolpropan, das Cyanurat aus 3 Molen Toluylendiisocyanat, dimerisiertes Toluylendiisocyanat mit Uretdiongruppen sowie feste Isocyanate auf Basis des Uretdions von Isophorondiisocyanat, wie beispielsweise das im Handel unter der Bezeichnung IPDI-BF 1540 der Firma Hüls erhältliche Produkt.

Wenn die erfindungsgemäßen Pulverlacke als Pulverklarlacke eingesetzt werden, enthalten sie ferner mindestens ein Lichtschutzmittel, bevorzugt in einer Menge von 0,1 bis 5 Gew.-%, bezogen auf das Gesamtgewicht des Pulverklarlacks.

Als Beispiele für geeignete Lichtschutzmittel seien UV-Absorber auf Basis von Benztriazol-Derivaten und Triazin-Derivaten, wie z.B. die im Handel erhältlichen Produkte Tinuvin® 900 und Tinuvin® 1130 der Firma Ciba Geigy oder Cyoguard® 1161 der Firma Clariant, und Lichtschutzmittel auf Basis sterisch gehinderter Amine (HALS), wie z.B. die im Handel erhältlichen Produkte Tinuvin® 144, Tinuvin® 242 und Tinuvin® 123 der Firma Ciba Geigy, genannt.

Neben den schon beschriebenen Komponenten kann der Pulverlack die üblichen Füllstoffe und Pigmente in Anteilen von etwa 1 bis 50 Gew.-%, bezogen auf das Gesamtgewicht des Pulverlacks, enthalten. Beispielhaft seien genannt: sowohl anorganische als auch organische Farbpigmente und /oder Füllstoffe, wie z.B. Titandioxid, Schwerspat, Silikate und Eisenoxid in verschiedenen Farbmodifikationen.

Außerdem können die Pulverlacke ggf. einen oder mehrere Katalysatoren, die die Urethanaushärtung katalysieren, enthalten. Diese Katalysatoren werden üblicherweise in einer Menge von 0,001 bis 3 Gew.-%, bezogen auf das Gesamtgewicht des Pulverlacks, eingesetzt. Als Beispiele für geeignete Katalysatoren seien vor allem organische Metallkatalysatoren genannt, wie z.B. organische Zinn(II)-, Zinn(IV)-, Eisen-, Blei-, Kobalt-, Wismuth-, Antimon-, Zink- und Magnesiumverbindungen. Geeignet sind ferner Aminkatalysatoren, wie z.B. Diazabicyclooctan und Diazabicycloundecan.

Die Pulverlacke können ferner ggf.einen oder mehrere geeignete Katalysatoren für die Epoxidharz-Aushärtung enthalten, falls sie als Bindemittel eine Mischung aus carboxyl- und epoxidgruppenhaltigen Verbindungen enthalten und die Carboxy/Epoxy- Umsetzung gleichzeitig mit der Pulverlackaushärtung erfolgt. Geeignete Katalysatoren sind Phosphoniumsalze organischer oder anorganischer Säuren, quarternäre Ammoniumverbindungen Amine, Imidazol und Imidazolderivate. Die Katalysatoren werden im allgemeinen in Anteilen von 0,001 Gew.-% bis etwa 2 Gew.-%, bezogen auf das Gesamtgewicht des Epoxidharzes und des Vernetzungsmittels, eingesetzt.

Beispiele für geeignete Phosphonium-Katalysatoren sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex. Diese sowie weitere geeignete Phosphonium Katalysatoren sind z.B. beschrieben in US-PS 3,477,990 und US-PS 3,341,580.

Geeignete Imidazol-Katalysatoren sind beispielsweise 2-Styrylimidazol, 1-Benzyl-2-methylimidazol, 2-Methylimidazol und 2-Butylimidazol. Diese sowie weitere Imidazol-Katalysatoren sind z.B. beschrieben in dem belgischen Patent Nr. 756,693.

Vorteilhaft ist desweiteren die Verwendung von Entgasungsmitteln, wie beispielsweise Benzoin in Anteilen von 0,1 bis 3 Gew.-%, bezogen auf das Gesamtgewicht des Pulverlacks, die das Verdampfen von flüchtigen Bestandteilen durch den sich bildenden Film beim Beschichtungsvorgang erleichtern (vergleiche beispielsweise US-P 5,055,524, Spalte 5, Zeilen 12-21 sowie EP-A 0 509 393, Seite 3, Zeilen 38-40).

Desweiteren werden im allgemeinen dem Pulverlack Verlaufshilfsmittel in Anteilen von 0,05 bis 5 Gew.-%, bezogen auf das Gesamtgewicht des Pulverlacks, zugesetzt. Beispielhaft seien oligomere Poly(meth)acrylate, wie z.B. Polylauryl(meth)acrylat, Polybutyl(meth)acrylat, Poly-2-ethylhexyl(meth)acrylat, fluorierte Polymere oder Polysiloxane genannt.

Der erfindungsgemäße Pulverlack kann außerdem auch in Form einer wäßrigen Dispersion zum Einsatz gelangen. Im folgenden wird dabei der Begriff Pulverlack-Dispersion als Synonym für Pulverlack-Slurry verwendet. Die wäßrige Pulverlack-Dispersion, insbesondere PulverklarlackDispersion, besteht dabei aus einer festen, pulverförmigen Komponente I und einer wäßrigen Komponente II, wobei die Komponente I der obenbeschriebene Pulverlack ist und die Komponente II eine wäßrige Dispersion ist, die wenigstens einen nicht-ionischen oder anionischen Verdicker und ggf. Katalysatoren, Hilfsstoffe, Entschäumungsmittel, Dispersionshilfsmittel, Netzmittel, vorzugsweise carboxyfunktionelle Dispergiermittel, Antioxydantien, UV-Absorber, Radikalfänger, geringe Mengen Lösemittel, Verlaufsmittel, Biozide und/oder Wasserrückhaltemittel enthält.

Die Herstellung der wäßrigen Pulverlack-Dispersion kann dadurch erfolgen, daß zunächst - wie oben beschrieben - der Pulverlack hergestellt wird. Aus dem Pulverlack kann anschließend durch Naßvermahlung oder durch Einrühren von trocken vermahlenem Pulverlack die wäßrige Pulverlack-Dispersion hergestellt werden. Besonders bevorzugt wird die Naßvermahlung.

Die vorliegende Erfindung betrifft demgemäß auch ein Verfahren zur Herstellung einer wäßrigen Pulverlack-Dispersion auf der Basis der beschriebenen Komponente I, die erfindungsgemäß in einer Komponente II dispergiert wird. Letztere besteht aus einer wäßrigen Dispersion von Katalysatoren, Hilfsstoffen, Antischaummitteln, Antioxidantien, Netzmitteln, UV-Absorbern, Radikalfängern, Bioziden, Wasserrückhaltemitteln, geringen Mengen Lösemitteln und/oder Dispergierhilfsmitteln, vorzugsweise carboxyfunktionelle Dispergierhilfsmitteln.

Nach der Dispergierung der Komponente I in der Komponente II wird ggfs.vermahlen, der pH-Wert auf 4,0 bis 10,0, vorzugsweise 5,5 bis 9,5 eingestellt und filtriert.

Die mittlere Korngröße liegt zwischen 1 und 25 µm, vorzugsweise unter 20 µm, besonders bevorzugt bei 3 bis 10µm. Der Festkörpergehalt der wäßrigen Pulverlack-Dispersion liegt zwischen 15 und 50 %.

Der Dispersion können vor oder nach der Naßvermahlung bzw. dem Eintragen des trockenen Pulverlackes in das Wasser 0 bis 5 Gew.% eines Entschäumergemisches, eines Ammonium und/oder Alkalisalzes, eines carboxylfunktionellen oder nichtionischen Dispergierhilfsmittels, Netzmittels und/oder Verdickergemisches sowie der anderen Additive zugesetzt werden. Vorzugsweise werden erfindungsgemäß Entschäumer, Dispergierhilfs-, Netz- und/oder Verdickungsmittel zunächst in Wasser dispergiert. Dann werden kleine Portionen des Pulverlackes eingerührt. Anschließend werden noch einmal Entschäumer, Dispergierhilfs-, Verdickungs- und Netzmittel eindispergiert. Abschließend werden nochmals in kleinen Portionen Pulverlacke eingerührt.

Die Einstellung des pH-Wertes erfolgt erfindungsgemäß vorzugsweise mit Ammoniak oder Aminen. Der pH-Wert kann hierbei zunächst ansteigen, daß eine stark basische Dispersion entsteht. Der pH-Wert fällt jedoch innerhalb mehrerer Stunden oder Tage wieder auf die oben angeführten Werte.

Der Pulverlack und die wäßrige Pulverlack-Dispersion können auf die unterschiedlichsten Substrate aufgebracht werden, beispielsweise Metall, Holz, Glas oder Kunststoff. Sie können auch im Bereich des Container-Coating, des Coil-Coating und der Folienbeschichtung eingesetzt werden. Die Pulverlacke und die wäßrigen Pulverlack-Dispersionen werden bevorzugt zur Herstellung einer Mehrschichtlackierung eingesetzt, besonders bevorzugt zur Herstellung einer Klarlackschicht auf einer Basislackschicht, vorzugsweise in der Automobilindustrie. Besonders geeignet ist der Pulverlack und die wäßrige Pulverlack-Dispersion für die Applikation auf Wasserbasislacken auf Basis eines Polyesters, Polyurethanharzes und eines Aminoplastharzes.

Gegenstand der vorliegenden Erfindung ist daher auch ein Verfahren zur Herstellung einer mehrschichtigen schützenden und/oder dekorativen Beschichtung, bei dem zunächst ein Basislack aufgebracht wird, aus dem Lack ein Polymerfilm gebildet wird, auf der so erhaltenen Basisschicht ein Decklack aufgebracht wird und anschließend die Basisschicht zusammen mit der Deckschicht getrocknet wird, dadurch gekennzeichnet, daß als Decklack der erfindungsgemäße Pulverlack oder die wäßrige Pulverlack-Dispersion eingesetzt wird.

Der Pulverlack wird mittels üblicher Methoden, wie beispielsweise elektrostatisches Spritzen oder Tribospritzen aufgetragen. Die erfindungsgemäßen Pulverlack-Dispersionen lassen sich mit den aus der Flüssiglacktechnologie bekannten Methoden aufbringen. Insbesondere können sie mittels Spritzverfahren aufgebracht werden. Ebenso kommen elektrostatisch unterstützte Hochrotation oder pneumatische Applikation in Betracht.

Die auf die Basislackschicht aufgebrachten Pulverlack-Dispersionen werden regelmäßig vor dem Einbrennen abgelüftet. Dies geschieht zweckmäßigerweise zunächst bei Raumtemperatur und anschließend bei leicht erhöhter Temperatur. In der Regel beträgt die erhöhte Temperatur 40 bis 70°C, vorzugsweise 50 bis 65°C. Das Ablüften wird für 2 bis 10 Minuten, vorzugsweise 4 bis 8 Minuten bei Raumtemperatur durchgeführt. Bei erhöhter Temperatur wird nochmals während derselben Zeitspanne abgelüftet.

Nach dem Auftrag der Pulverlacke oder der Pulverlack-Dispersion wird üblicherweise bei Temperaturen zwischen 120 und 220 Grad C, vorzugsweise zwischen 120 und 200 Grad C und besonders vorzugsweise zwischen 140 und 180°C ausgehärtet. Die Einbrenndauer liegt zwischen 5 und 60, vorzugsweise zwischen 20 und 40 Minuten.

Mit dem erfindungsgemäßen Verfahren unter Verwendung der Pulverlack-Dispersionen können Schichtdicken von 30 bis 50, vorzugsweise 35 bis 45 µm erreicht werden. Klarlacke mit vergleichbarer Qualität konnten bisher nach dem Stand der Technik unter Einsatz von Pulverklarlacken nur durch Auftrag von Schichtdicken von 65 bis 80 µm erreicht werden.

Im folgenden wird nun die Erfindung anhand von Ausführungsbeispielen näher erläutert. Alle Angaben über Teile oder Prozentsätze stellen dabei Gewichtsangaben dar, falls nicht ausdrücklich etwas anderes angegeben wird.

### 1. Herstellung einees hydroxylgruppenhaltigen Bindemittels

260 Teile Xylol werden in einem Laborkessel vorgelegt und auf 120 °C erwärmt. Innerhalb von 4 h wird über zwei separate Zuläufe eine Mischung 1 aus 30,15 Teilen Methylmethacrylat, 13,40 Teilen Styrol, 16,75 Teilen Hydroxyethylmethacrylat und 6,7 Teilen n-Butylacrylat und eine Mischung 2 aus 3,00 Teilen tert.-Butylperethylhexanoat und 4,0 Teilen Xylol zudosiert. Während der Zugabe der Mischungen 1 und 2 sowwie eine Stunde danach wird die Temperatur bei 120 °C gehalten. Dann wird stufenweise durch Erhöhung der Temperatur auf 180 °C das Xylol abdestilliert. Abschließend wird für eine Stunde ein Vakuum von 100 mbar angelegt und das Harz ausgetragen. Das erhaltene Harz hat ein zahlenmittleres Molekulargewicht von 3.500 Dalton, eine Glasübergangstemperatur von 55 °C und eine OH-Zahl von 117 mgKOH/g.

### 2. Herstellung und Applikation eines Pulverlacks

0,07 Teile eines handelsüblichen cycloaliphatischen Diamins (Handelsprodukt Laromin® C260 der BASF AG, Ludwigshafen) werden unter Inertgasatmosphäre in einer 140 °C heißen Schmelze von 81,72 Teilen des obenbeschriebenen Acrylatharzes gelöst. Sodann wird die Schmelze unter den Erstarrungspunkt abgekühlt und grob zerkleinert. Dann werden 14,83 Teile eines handelsüblichen kristallinen, auf eine mittlere Teilchengröße von 15 µm vorvermahlenen Isocyanates auf Basis eines dimerisierten 2,4-Toluylendiisocyanates (Handelsprodukt Desmodur® TT der Firma Bayer AG, Leverkusen), 1,93 Teile eines handelsüblichen Lichtschutzmittels auf Basis Benztriazol (Tinuvin® 900 der Firma Ciba Geigy), 0,87 Teile eines handelsüblichen Lichtschutzmittels auf HALS-Basis (Tinuvin® 144 der Firma Ciba Geigy), 0,19 Teile eines handelsüblichen Verlaufsmittels auf Acrylatbasis (Handelsprodukt Perenol® F40) und 0,39 Teile Benzoin zugegeben. Die Mischung wird dann in einem Fluidmischer der Firma Henschel intensiv vermischt. Die so hergestellte Mischung wird mit einem Einschnecken-Kneter PLK 46 der Firma Buss extrudiert. Das Extrudat wird unmittelbar mit einer Kühlwalze abgekühlt und zu Chips gebrochen. Die Extrudatchips werden mit einer Sichtermühle ACM 2 der Firma Hosokawa auf eine mittlere Korngrößenverteilung von 20 bis 30 µm vermahlen und einer Schutzsiebung bei 125 µm unterzogen.

Der so erhaltene Pulverlack wird mit einem Standard-equipment mit Corona-Pistolen elektrostatisch versprüht. Die erhaltenen Filme mit einer Schichtdicke von 60 bis 100 µm werden 30 min bei 160 °C eingebrannt. Man erhält eine glänzende Beschichtung, die gegen MEK beständig ist.

## Patentansprüche

1. Pulverlack, enthaltend
A) mindestens ein hydroxylgruppenhaltiges Bindemittel (A) und
B) mindestens ein Vernetzungsmittel mit freien Isocyanatgruppen, das in Form von diskreten Teilchen mit Teilchendurchmessern zwischen 0,1 bis 150 Mikrometern in dem Bindemittel dispergiert ist,
dadurch gekennzeichnet, daß als Bindemittel (A)
A1) mindestens ein hydroxylgruppenhaltiges Acrylatcopolymerisat (A1) mit einer Glasübergangstemperatur von 30 bis 80 °C, einem zahlenmittleren Molekulargewicht von 2.000 bis 15.000 Dalton und einer OH-Zahl von 60 bis 180 mgKOH/g, wobei die Hydroxylgruppen des Bindemittels (A1) zu mehr als 50 % aus primär gebundenen OH-Gruppen bestehen, und/oder
A2) das Umsetzungsprodukt aus einem carboxylgruppenhaltigen Acrylatcopolymerisat und einer epoxidgruppenhaltigen Verbindung oder das Umsetzungsprodukt aus einem epoxidgruppenhaltigen Acrylatcopolymerisat und einer carboxylgruppenhaltigen Verbindung, wobei die Carboxy/Epoxy-Umsetzung jeweils vor oder während der Reaktion des Bindemittels (A) mit dem Vernetzungsmittel (B) erfolgen kann,
eingesetzt wird.

2. Pulverlack, nach Anspruch 1, dadurch gekennzeichnet, daß das als Bindemittel eingesetzte hydroxylgruppenhaltige Acrylatcopolymerisat (A1) eine OH-Zahl von 100 bis 170 mgKOH/g und/oder ein zahlenmittleres Molekulargewicht von 2.000 bis 10.000 Dalton und/oder eine Glasübergangstemperatur von 40 bis 60 °C aufweist.

3. Pulverlack, nach Anspruche 1 oder 2, dadurch gekennzeichnet, daß der Pulverlack ein Pulverklarlack ist und mindestens ein Lichtschutzmittel enthält.

4. Pulverlack nach einem der Ansprüche 1 bis 3, dadurch gekennzeichnet, daß das Vernetzungsmittel auf einem aliphatischen und/oder cycloaliphatischen Isocyanat, bevorzugt auf Isophorondiisocyanat oder Isophorondiisocyanat-Derivaten, basiert.

5. Pulverlack nach einem der Ansprüche 1 bis 4, dadurch gekennzeichnet, daß das Bindemittel (A) und der Vernetzer (B) in solchen Mengen eingesetzt werden, daß das Äquivalentverhältnis von Hydroxyl- zu Isocyanatgruppen zwischen 0,7 : 1 und 1 : 0,7 liegt.

6. Pulverlack nach einem der Ansprüche 1 bis 5, dadurch gekennzeichnet, daß die Polyisocyanatteilchen an ihrer Oberfläche durch Reaktion mit einem Desaktivierungsmittel desaktiviert sind.

7. Pulverlack, nach einem der Ansprüche 1 bis 6, dadurch gekennzeichnet, daß er erhältlich ist, indem zunächst das Bindemittel und das Vernetzungsmittel sowie ggf. weitere übliche Hilfs- und Zusatzstoffe in verflüssigtem Gas oder in überkritischem Gas, bevorzugt überkritischem Kohlenstoffdioxid, gelöst bzw. suspendiert werden und anschließend die Pulverteilchen durch Versprühen erzeugt werden.

8. Pulverlack, nach einem der Ansprüche 1 bis 5, dadurch gekennzeichnet, daß er erhältlich ist, indem das Bindemittel und das Vernetzungsmittel sowie ggf. weitere übliche Hilfs- und Zusatzstoffe geschmolzen, intensiv vermischt und schnell abgekühlt, bevorzugt abgeschreckt, werden.

9. Wäßrige Pulverlack-Dispersion bestehend aus einer festen, pulverförmigen Komponente I und einer wäßrigen Komponente II, wobei die Komponente I ein Pulverlack ist und die Komponente II eine wäßrige Dispersion ist, die wenigstens einen Verdicker, ggf. Katalysatoren, Hilfsstoffe, Entschäumungsmittel, Netzmittel, Dispersionshilfsmittel, vorzugsweise carboxyfunktionelle Dispergiermittel, Antioxidantien, UV-Absorber, Radikalfänger, Biozide, geringe Mengen Lösemittel, Verlaufsmittel, Neutralisierungsmittel, vorzugsweise Amine, und/oder Wasserrückhaltemittel enthält, dadurch gekennzeichnet, daß die Pulverlack-Dispersion als Komponente I einen Pulverlack nach einem der Ansprüche 1 bis 8 enthält.

10. Verfahren zur Herstellung eines Pulverlackes nach einem der Ansprüche 1 bis 6, dadurch gekennzeichnet, daß das Polyisocyanat zunächst mit dem Desaktivierungsmittel umgesetzt und fein vorvermahlen wird, bevorzugt auf eine Teilchengröße zwischen 0,1 und 150 Mikrometer, und dann zusammen mit dem Bindemittel sowie weiteren üblichen Hilfs- und Zusatzstoffen zunächst gemischt und anschließend extrudiert wird.

11. Verfahren zur Herstellung eines Pulverlackes nach Anspruch 7, dadurch gekennzeichnet, daß zunächst das Bindemittel und das Vernetzungsmittel sowie ggf. weitere übliche Hilfs- und Zusatzstoffe in verflüssigtem oder überkritischem Gas, bevorzugt überkritischem Kohlenstoffdioxid, gelöst oder suspendiert werden und anschließend die Pulverteilchen durch Versprühen erzeugt werden.

12. Verfahren zur Herstellung eines Pulverlackes nach Anspruch 8, dadurch gekennzeichnet, daß das Bindemittel und das Vernetzungsmittel sowie ggf. weitere übliche Hilfs- und Zusatzstoffe geschmolzen, intensiv vermischt und schnell abgekühlt, bevorzugt abgeschreckt, werden.

13. Verfahren zur Herstellung einer Mehrschichtlackierung, bei dem zunächst ein Basislack aufgebracht wird, aus dem Lack ein Polymerfilm gebildet wird, auf der so erhaltenen Basisschicht ein Decklack aufgebracht wird und anschließend die Basisschicht zusammen mit der Deckschicht getrocknet wird, dadurch gekennzeichnet, daß als Decklack ein Pulverlack nach einem der Ansprüche 1 bis 8 oder eine Pulverlack-Dispersion nach Anspruch 9 eingesetzt wird.

14. Verwendung der Pulverlacke nach einem der Ansprüche 1 bis 8 oder der wäßrigen Pulverlack-Dispersion nach Anspruch 9 zur Beschichtung von lackierten und nicht lackierten Automobilkarosserien aus Metallblech und/oder Kunststoff.

## Claims

1. Powder coating comprising
A) at least one hydroxyl-containing binder (A) and
B) at least one crosslinking agent having free isocyanate groups, which is dispersed in the binder in the form of discrete particles with diameters of between 0.1 to 150 micrometers,
characterized in that the binder (A) employed comprises
A1) at least one hydroxyl-containing acrylate copolymer (A1) having a glass transition temperature of from 30 to 80°C, a number-average molecular weight of from 2000 to 15,000 daltons and an OH number of from 60 to 180 mg of KOH/g, more than 50 % of the hydroxyl groups of the binder (A1) being primary-bonded OH groups, and/or
A2) the reaction product of a carboxyl-containing acrylate copolymer and a compound containing epoxide groups, or the reaction product of an acrylate copolymer containing epoxide groups and a carboxyl-containing compound, the carboxy/epoxy reaction being able in each case to be carried out prior to or during the reaction of the binder (A) with the crosslinking agent (B).

2. Powder coating, according to claim 1, characterized in that the hydroxyl-containing acrylate copolymer (A1) employed as binder has an OH number of from 100 to 170 mg of KOH/g and/or a number-average molecular weight of from 2000 to 10,000 daltons and/or a glass transition temperature of from 40 to 60°C.

3. Powder coating, according to claim 1 or 2, characterized in that the powder coating is a transparent powder coating and comprises at least one light stabilizer.

4. Powder coating according to one of claims 1 to 3, characterized in that the crosslinking agent is based on an aliphatic and/or cycloaliphatic isocyanate, preferably on isophorone diisocyanate or isophorone diisocyanate derivatives.

5. Powder coating according to one of claims 1 to 4, characterized in that the binder (A) and the crosslinking agent (B) are employed in quantities such that the ratio of equivalents of hydroxyl groups to isocyanate groups is between 0.7 : 1 and 1 : 0.7.

6. Powder coating according to one of claims 1 to 5, characterized in that the polyisocyanate particles are deactivated on their surface by reaction with a deactivating agent.

7. Powder coating, according to one of claims 1 to 6, characterized in that it is obtainable by first of all dissolving or suspending the binder and the crosslinking agent and, if desired, further customary auxiliaries and additives in liquefied gas or in supercritical gas, preferably supercritical carbon dioxide, and then producing the powder particles by spraying.

8. Powder coating, according to one of claims 1 to 5, characterized in that it is obtainable by intensively mixing the binder and the crosslinking agent and, if desired, further customary auxiliaries and additives in molten form and cooling the melt rapidly, preferably by quenching.

9. Aqueous powder coating dispersion comprising a solid pulverent component I and an aqueous component II, component I being a powder coating and component II being an aqueous dispersion comprising at least one thickener, if desired catalysts, auxiliaries, defoamers, wetting agents, dispersion auxiliaries, preferably carboxy-functional dispersants, antioxidants, UV absorbers, free-radical scavengers, biocides, small quantities of solvents, leveling agents, neutralizing agents, preferably amines, and/or water retention agents, characterized in that the powder coating dispersion comprises as component I a powder coating according to one of claims 1 to 8.

10. Process for the preparation of a powder coating according to one of claims 1 to 6, characterized in that the polyisocyanate is first of all reacted with the deactivating agent and finely premilled, preferably to a particle size of between 0.1 and 150 micrometers, and the product is then first of all mixed together with the binder and further customary auxiliaries and additives and the mixture is then extruded.

11. Process for the preparation of a powder coating according to claim 7, characterized in that first of all the binder and the crosslinking agent and, if desired, further customary auxiliaries and additives are dissolved or suspended in liquefied or supercritical gas, preferably supercritical carbon dioxide, and then the powder particles are produced by spraying.

12. Process for the preparation of a powder coating according to claim 8, characterized in that the binder and the crosslinking agent and, if desired, further customary auxiliaries and additives are melted, intensively mixed and rapidly cooled, preferably quenched.

13. Process for producing a multicoat finish, in which first of all a base coat is applied, a polymer film is formed from the coating, a top coat is applied to the base coat-film thus obtained, and then the base coat-film is dried together with the top coat-film, characterized in that the top coat employed is a powder coating according to one of claims 1 to 8 or a powder coating dispersion according to claim 9.

14. Use of the powder coatings according to one of claims 1 to 8 or the aqueous powder coating dispersion according to claim 9 for coating painted and unpainted car bodies of sheet metal and/or plastic.

## Revendications

1. Peinture pulvérulente comprenant
A) au moins un liant renfermant des groupes hydroxy (A) et
B) au moins un agent de réticulation ayant des groupes isocyanate libres, qui est dispersé dans le liant sous forme de particules discrètes ayant des diamètres compris entre 0,1 et 150 micromètres,
caractérisée en ce que l'on utilise, en tant que liant (A),
A1) au moins un copolymère d'acrylate renfermant des groupes hydroxy (A1) ayant une température de transition vitreuse de 30 à 80°C, un poids moléculaire moyen en nombre de 2000 à 15 000 daltons et un indice OH de 60 à 180 mg KOH/g, les groupes hydroxy du liant (A1) étant constitués de plus de 50% de groupes OH à liaison primaire, et/ou
A2) le produit de réaction d'un copolymère d'acrylate renfermant des groupes carboxy et d'un composé renfermant des groupes époxy ou le produit de réaction d'un copolymère d'acrylate renfermant des groupes époxy et d'un composé renfermant des groupes carboxy, la réaction carboxy/époxy pouvant être réalisée, dans chaque cas, avant ou durant la réaction du liant (A) avec l'agent de réticulation (B).

2. Peinture pulvérulente selon la revendication 1, caractérisée en ce que le copolymère d'acrylate renfermant des groupes hydroxy (A1) utilisé en tant que liant présente un indice OH de 100 à 170 mg KOH/g et/ou un poids moléculaire moyen en nombre de 2000 à 10 000 daltons et/ou une température de transition vitreuse de 40 à 60°C.

3. Peinture pulvérulente selon les revendications 1 ou 2, caractérisée en ce que la peinture pulvérulente est une peinture transparente pulvérulente et comprend au moins un photostabilisant.

4. Peinture pulvérulente selon l'une quelconque des revendications 1 à 3, caractérisée en ce que l'agent de réticulation est à base d'un isocyanate aliphatique et/ou cycloaliphatique, de préférence de diisocyanate d'isophorone ou de dérivés de diisocyanate d'isophorone.

5. Peinture pulvérulente selon l'une quelconque des revendications 1 à 4, caractérisée en ce que le liant (A) et l'agent de réticulation (B) sont utilisés en quantités telles que le rapport d'équivalents entre les groupes hydroxy et isocyanate soit compris entre 0,7:1 et 1:0,7.

6. Peinture pulvérulente selon l'une quelconque des revendications 1 à 5, caractérisée en ce que les particules de polyisocyanate sont désactivées à leur surface par réaction avec un agent désactivant.

7. Peinture pulvérulente selon l'une quelconque des revendications 1 à 6, caractérisée en ce qu'elle peut être obtenue en ce que le liant et l'agent de réticulation, et éventuellement d'autres auxiliaires et additifs habituels, sont d'abord dissous ou mis en suspension dans un gaz liquéfié ou dans un gaz supercritique, de préférence du dioxyde de carbone supercritique, et les particules de poudre sont ensuite produites par pulvérisation.

8. Peinture pulvérulente selon l'une quelconque des revendications 1 à 5, caractérisée en ce qu'elle peut être obtenue en ce que le liant et l'agent de réticulation, et éventuellement d'autres auxiliaires et additifs habituels, sont fondus, mélangés intensivement et refroidis rapidement, de préférence soumis à une trempe.

9. Dispersion aqueuse de peinture pulvérulente constituée d'un composant solide pulvérulent I et d'un composant aqueux II, le composant I étant une peinture pulvérulente et le composant II étant une dispersion aqueuse comprenant au moins un épaississant, éventuellement des catalyseurs, des auxiliaires, des antimousses, des agents mouillants, des auxiliaires de dispersion, de préférence des agents dispersants à fonction carboxy, des antioxydants, des agents absorbant les UV, des capteurs de radicaux, des biocides, de faibles quantités de solvants, des agents d'égalisation, des agents neutralisants, de préférence des amines, et/ou des agents de rétention d'eau, caractérisée en ce que la dispersion de peinture pulvérulente comprend une peinture pulvérulente selon l'une quelconque des revendications 1 à 8, en tant que composant I.

10. Procédé de production d'une peinture pulvérulente selon l'une quelconque des revendications 1 à 6, caractérisé en ce que le polyisocyanate est d'abord mis à réagir avec l'agent désactivant et soumis à un prébroyage fin, de préférence à une granulométrie comprise entre 0,1 et 150 micromètres, puis d'abord mélangé et ensuite extrudé conjointement avec le liant et d'autres auxiliaires et additifs habituels.

11. Procédé de production d'une peinture pulvérulente selon la revendication 7, caractérisé en ce que le liant et l'agent de réticulation, et éventuellement d'autres auxiliaires et additifs habituels, sont d'abord dissous ou mis en suspension dans un gaz liquéfié ou supercritique, de préférence du dioxyde de carbone supercritique, et les particules de poudre sont ensuite produites par pulvérisation.

12. Procédé de production d'une peinture pulvérulente selon la revendication 8, caractérisé en ce que le liant et l'agent de réticulation, et éventuellement d'autres auxiliaires et additifs habituels, sont fondus, mélangés intensivement et refroidis rapidement, de préférence soumis à une trempe.

13. Procédé de production d'un revêtement multicouche, dans lequel une couche de fond est d'abord appliquée, un film polymère est formé à partir de la peinture, une couche de finition est appliquée sur la couche de fond ainsi obtenue et la couche de fond est ensuite séchée conjointement avec la couche de finition, caractérisé en ce que l'on utilise, en tant que couche de finition, une peinture pulvérulente selon l'une quelconque des revendications 1 à 8 ou une dispersion de peinture pulvérulente selon la revendication 9.

14. Utilisation des peintures pulvérulentes selon l'une quelconque des revendications 1 à 8 ou de la dispersion aqueuse de peinture pulvérulente selon la revendication 9, pour le revêtement de carrosseries d'automobiles peintes et non peintes, en tôle métallique et/ou en plastique.
